# EUROPÄISCHE PATENTSCHRIFT

(11) **EP 1 069 306 B1**
(45) Veröffentlichungstag und Bekanntmachung des Hinweises auf die Patenterteilung: **01.12.2004**
(21) Anmeldenummer: 00113645.6
(22) Anmeldetag: 28.06.2000
(51) Int. Cl.: F02M 35/104

(54) **Saugrohr für eine Brennkraftmaschine**
Intake conduit for a combustion engine
Tubulure d'admission pour un moteur à combustion

(30) Priorität: 15.07.1999 DE 19933032
(43) Veröffentlichungstag der Anmeldung: 17.01.2001
(73) Patentinhaber: Mann + Hummel GmbH, 71638 Ludwigsburg (DE)
(72) Erfinder: Jainek, Herbert, 74074 Heilbronn (DE)
(74) Vertreter: Voth, Gerhard, Dipl.-Ing.

(56) Entgegenhaltungen:
- EP-A- 0 432 919
- PATENT ABSTRACTS OF JAPAN vol. 1999, no. 10, 31. August 1999 (1999-08-31) & JP 11 132119 A (DENSO CORP;TOYODA SPINNING & WEAVING CO LTD), 18. Mai 1999 (1999-05-18)
- PATENT ABSTRACTS OF JAPAN vol. 1999, no. 12, 29. Oktober 1999 (1999-10-29) & JP 11 182367 A (TOYOTA MOTOR CORP), 6. Juli 1999 (1999-07-06)
- PATENT ABSTRACTS OF JAPAN vol. 1999, no. 10, 31. August 1999 (1999-08-31) & JP 11 141419 A (TOYOTA MOTOR CORP), 25. Mai 1999 (1999-05-25)
- PATENT ABSTRACTS OF JAPAN vol. 1999, no. 09, 30. Juli 1999 (1999-07-30) & JP 11 107870 A (DAIHATSU MOTOR CO LTD;TOYOTA MOTOR CORP), 20. April 1999 (1999-04-20)
- PATENT ABSTRACTS OF JAPAN vol. 1998, no. 14, 31. Dezember 1998 (1998-12-31) & JP 10 252588 A (DAIHATSU MOTOR CO LTD), 22. September 1998 (1998-09-22)

## Beschreibung

### Stand der Technik

i Die Erfindung betrifft ein Saugrohr für eine Brennkraftmaschine mit einem Sammelraum und mehreren Saugkanälen für die Verbrennungsluft nach der Gattung des Patentanspruches 1.

Derartige Saugrohr sind aus dem Stand der Technik hinlänglich bekannt. So zeigt z. B. die DE 195 39 078 ein Saugrohr mit einem gemeinsamen Sammelraum und vier von dort abgehenden Saugkanälen, die in einem Zylinderkopfflansch enden, wo zylinderseitige Auslässe gebildet sind. Die Luftführungsgeometrie des Saugrohrs muß auf dessen akustisches sowie strömungstechnisches Verhalten hin ausgelegt werden. Hierzu sind bestimmte Volumina, z. B. Nebenschlußresonatoren, und bestimmte Saugkanallängen, z. B. zur Bewerkstelligung einer Schwingrohrauflage, notwendig.

Diese konstruktiven Maßnahmen verbessern das Ansaugverhalten der Saugrohre beträchtlich. Der Nachteil dabei ist, dass die Saugrohrkonstruktion aufgrund der physikalischen Gesetzmäßigkeiten in ihrer freien Gestaltung eingeschränkt ist. Insbesondere für weitere Aggregate, die an der Brennkraftmaschine Platz finden sollen, müssen hinsichtlich der Zugänglichkeit bzw. der Strömungsgeometrie Abstriche gemacht werden. Dies verursacht Kosten, weswegen die Wirtschaftlichkeit der Brennkraftmaschine als Gesamtbaugruppe beeinträchtigt wird.

Weiterhin zeigt die JP 11 132119 ein Saugrohr mit mehreren Saugkanälen. Die Saugkanäle münden alle in einem Flansch. Zwischen zwei benachbarten Saugkanälen ist eine Luftleitung angeordnet, welche zu einem Luftfilter führt.

Die Aufgabe der Erfindung besteht daher darin, ein Saugrohr zu schaffen, welches ein günstiges Strömungsverhalten mit der guten Zugänglichkeit anderer am Motor befestigter Baugruppen verbindet. Diese Aufgabe wird durch die Merkmale des Patentanspruches 1 gelöst.

### Vorteile der Erfindung

Das erfindungsgemäße Saugrohr weist einen Zwischenraum zwischen zwei benachbarten Saugkanälen auf, welcher für die Anbringung eines weiteren Funktionselementes an der Brennkraftmaschine genutzt werden kann. Dieses Funktionselement ist dann vorteilhafterweise von oben leicht zugänglich, da das Saugrohr im oberen Teil der Brennkraftmaschine montiert wird. Dies verbessert die Serviceeigenschaften des Funktionselementes, wodurch eine höhere Wirtschaftlichkeit beim Betrieb der Brennkraftmaschine erreicht werden kann.

Das Funktionselement kann z. B. aus einem Ölnebelabscheider für die Kurbelgehäusegase der Brennkraftmaschine bestehen. Eine andere Möglichkeit ist die Unterbringung des Ölfilters zur Reinigung des Schmieröls der Brennkraftmaschine. Die Servicefreundlichkeit wirkt sich bei diesen Ausführungsbeispielen in erster Linie auf den Wechsel der Filterelemente aus. Wird der Zwischenraum zur Unterbringung eines Filtergehäuses genutzt, hat dies zusätzlich den Vorteil, daß dieses stehend an der Brennkraftmaschine angeordnet werden kann. Hierdurch ergibt sich bei einem Wechsel des Filterelements ein zwangsgesteuerter Leerlauf des Gehäuses, welcher gewünscht ist, um ein kleckerfreies Wechseln des Ölfilters zu ermöglichen.

Gemäß einer sinnvollen Ausgestaltung des Erfindungsgedankens kann das Filtergehäuse mit dem Saugrohr fest verbunden sein. Hierdurch ergibt sich eine kompakte Baueinheit, die bei der Montage des Motors am Band als komplette Baueinheit vormontiert geliefert werden kann. Hierdurch läßt sich die Wirtschaftlichkeit der vorgeschlagenen Lösung noch steigern. Das Funktionselement kann z. B. im Zwischenraum mit Saugkanälen verschweißt werden. Dies ist sowohl bei Metall- als auch bei Kunststoffsaugrohren möglich. Der Vorteil der sich hierbei ergibt, ist, daß sich das Funktionselement und das Saugrohr gegenseitig versteifen, wodurch Material eingespart werden kann.

Es ist vorteilhaft, das Filtergehäuse, oder zumindest den Teil des Saugkanals, mit dem Funktionselement einteilig herzustellen. Dies ist z. B. als Spritzgießteil zu realisieren. Dabei kann die entstehende Einheit als Saugrohrschale ausgeführt sein und mit weiteren Saugrohrschalen verbunden werden. Es ist auch möglich das gesamte Saugrohr mit dem Funktionselement z. B. in der Kernausschmelztechnik einteilig herzustellen. Durch diese Maßnahmen lassen sich die Fertigungsschritte des Schweißens einsparen und das Teil in einem Fertigungsgang herstellen.

Eine vorteilhafte Ausführungsform der Erfindung ergibt sich, wenn das Funktionselement einen Flansch aufweist, mit dem es direkt an die Brennkraftmaschine befestigbar ist. Dies versteift die gesamte Baueinheit zusätzlich. Außerdem können auf diesem Wege für das Funktionselement notwendige Anschlüsse mit der Brennkraftmaschine realisiert werden. Für den Fall, daß das Funktionselement ein Ölfilter ist, ergibt sich eine besondere Ausführungsform der Erfindung dadurch, daß das Filtergehäuse mit einem Filterflansch versehen wird, welcher zumindest einen Anschluß zum Ölkreislauf der Brennkraftmaschine realisiert. Dies führt zu einer verstärkten Bauteilintegration. Es lassen sich die sonst notwendigen Anschlußwege zum Ölfilter vermeiden. Es ist vorteilhaft sowohl den Öleintritt für das zu reinigende Öl als auch den Ölaustritt für das gereinigte Öl sowie den Ölrücklauf für den Fall eines Filterwechsels in den Filterflansch zu integrieren. Hierdurch wird der optimale Integrationsgrad für den Filterflansch erreicht. Dabei können der Ölaustritt und der Ölrücklauf auch in einem Anschluß zusammengefasst werden.

Ähnliche Vorteile lassen sich erreichen, wenn anstelle des Filtergehäuses als Funktionselement ein Gehäuse für den Ölnebelabscheider der Kurbelgehäusegasentlüftung verwendet wird. Auch dieser benötigt einen Flansch zur Brennkraftmaschine hin, in dem zumindest ein Gaseintritt für das Kurpelgehäusegas und ein Ölrücklauf für das abgeschiedene Öl vorgesehen sein muß.

In Abhängigkeit von den Abmessungen der einzelnen Funktionselemente können auch mehrere in einem Zwischenraum oder in unterschiedlichen Zwischenräumen zwischen den Saugkanälen angeordnet werden. Dies stellt lediglich eine Vervielfachung des erfindungsgemäßen Intergrationsgedanken dar.

Eine weitere Variante der Erfindung ergibt sich, wenn an dem Filterflansch zusätzlich die Aufnahme für einen Ölkühler vorgesehen wird. Dieser kann dann platzsparend unter dem Saugrohr angebracht werden. Hierzu kann der Filterflansch doppelseitig ausgeführt sein, wobei eine Seite mit der Brennkraftmaschine und die andere Seite mit dem Ölkühler kommuniziert. Diese Bauform stellt eine konsequente Weiterführung des Integrationsgedankens dar. Sie erweitert die Systemgrenzen des Saugrohrs als Komplettteil so daß in der Endmontage der Brennkraftmaschine weitere Schritte eingespart werden können.

Für den Fall, daß das Saugrohr über den Filterflansch starr mit der Brennkraftmaschine verbunden ist, ergibt sich eine vorteilhafte Ausbildung des Erfindungsgedankens, dadurch, daß die zylinderkopfseitigen Austritte des Saugrohrs über elastische Entkopplungselemente mit der Brennkraftmaschine verbunden werden. Dies sind z. B. Gummimuffen, die eine Relativbewegung zwischen Saugrohr und Brennkraftmaschine zulassen. Dies verhindert, daß das Saugrohr mit dem integrierten Filter statisch überbestimmt ist, was hohe Anforderungen an die Bauteiltoleranzen bewirken würde. Dies soll jedoch vermieden werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ein Ausführungsbeispiel der Erfindung wird nachfolgendend anhand der Zeichnungen erläutert. Hierbei zeigen
- Figur 1: ein Saugrohr mit einem eingebauten Ölfilter und vier Saugkanälen, die mit Entkopplungselementen versehen sind, als Aufsicht,
- Figur 2: Das Detail X aus Figur 1, teilweise aufgeschnitten und
- Figur 3: den Schnitt A-A gemäß Figur 1, wobei hierzu zusätzlich die Brennkraftmaschine und ein Kühlsystem für das Öl angedeutet ist.

### Beschreibung der Ausführungsbeispiele

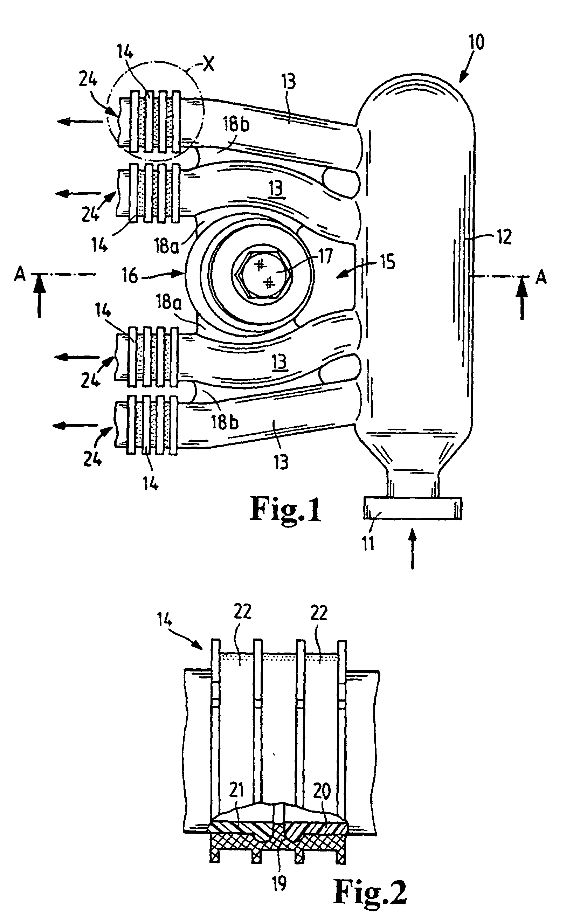

Aus Figur 1 läßt sich der Aufbau des erfindungsgemäßen Saugrohres 1 erkennen. Dieses weist einen Einlaß 11 auf, welcher in einen Sammelraum 12 mündet, von dem Saugkanäle 13 abgehen und zu Austritten 24 führen, welche über Entkopplungselemente 14 mit der nicht dargestellten Brennkraftmaschine verbunden sind. Die Flußrichtung der Ansaugluft ist durch Pfeile gekennzeichnet.

Zwischen zweien der Saugkanäle 13 ist ein Zwischenraum 15 vorgesehen, der zur Aufnahme eines Filtergehäuses 16 dient. Dieses ist mit einem Deckel 17 verschlossen. Zur Erhöhung der Steifigkeit sind die Saugkanäle untereinander und Das Filtergehäuse 16 zu den Saugkanälen durch Rippen 18a, 18b miteinander verbunden. Damit ergibt das Filtergehäuse zusammen mit dem Saugrohr eine Baueinheit, die z. B. gußtechnisch hergestellt werden kann. Alternativ hierzu könnte das Filtergehäuse auch einzeln hergestellt werden. Die Anordnung würde Figur 1 entsprechen, nur das die Rippen 18a weggelassen werden würden.

In Figur 2 ist der Aufbau des Entkupplungselementes 14 dargestellt. Dieses besteht aus einer Gummimanschette 19, in die ein Saugkanalende 20 und ein Anschlußende 21 der Brennkraftmaschine derart hineingesteckt werden, daß diese sich nicht berühren. Durch Manschettenringe 22 werden die Enden vor dem Herausrutschen aus der Gummimanschette bewahrt.

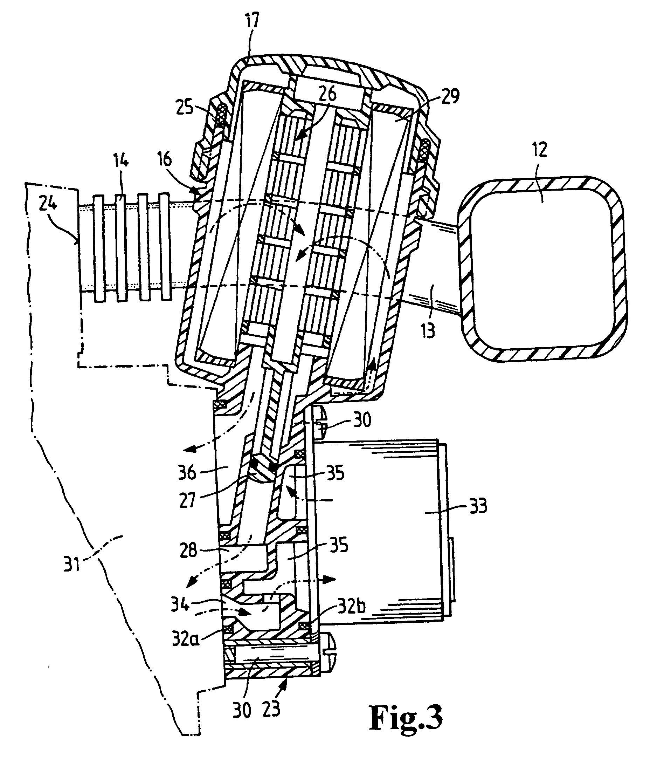

Der Figur 3 läßt sich der Aufbau des in das Saugrohr integrierten Filters entnehmen. Der Schnitt verläuft durch das Filtergehäuse 16, einen Filterflansch 23, und den Sammelraum 12. Das Filtergehäuse weist eine nach oben weisende Einbauöffnung auf, die durch den Deckel 17 unter Zuhilfenahme eines Dichtrings 25 verschlossen ist. Mit dem Deckel ist ein Stützrohr 26 z. B. durch Schweißen fest verbunden. Dieses weist einen abgedichteten Verschluß 27 für einen Ölrücklauf 28 auf. Für das Auswechseln eines Filtereinsatzes 29 wird der Deckel mit dem Stützrohr entfernt, wodurch es zu einem Leerlauf des Filtergehäuses 16 kommt.

Der Filterflansch ist doppelseitig ausgeführt und mit Hilfe von Schrauben 30 an der angedeuteten Brennkraftmaschine 31 befestigt. Eine Profildichtung 32a sorgt für eine Abdichtung zwischen Filterflansch und Brennkraftmaschine. Auf der anderen Seite des Flansches ist ein Ölkühler 33 unter Zuhilfenahme einer Profildichtung 32b montiert, wobei zur Fixierung ebenfalls die Schrauben 30 dienen.

Während des Betriebs nimmt das Öl der Brennkraftmaschine den durch Pfeile angeordneten Weg durch die Funktionseinheit. Durch einen Öleintritt 34 gelangt es in eine Kanalstruktur 35, durch die es in den Ölkühler 33 eingespeist und nach erfolgter Kühlung wieder zurückgegeben wird. Von dort aus erreicht es das Filtergehäuse 16, durchströmt den Filtereinsatz 29 von außen nach innen und erreicht im Inneren des Stützrohrs 26 den Ölaustritt 36, der zurück in die Brennkraftmaschine führt.

### Bezugszeichenliste

- 10: Saugrohr
- 11: Einlaß
- 12: Sammelraum
- 13: Saugkanal
- 14: Entkopplungselement
- 15: Zwischenraum
- 16: Filtergehäuse
- 17: Deckel
- 18a, 18b: Rippe
- 19: Gummimanschette
- 20: Saugkanalende
- 21: Anschlußende
- 22: Manschettenring
- 23: Filterflansch
- 24: Austritt
- 25: Dichtring
- 26: Stützrohr
- 27: Verschluß
- 28: Ölrücklauf
- 29: Filtereinsatz
- 30: Schraube
- 31: Brennkraftmaschine
- 32a, 32b: Profildichtung
- 33: Ölkühler
- 34: Öleintritt
- 35: Kanalstruktur
- 36: Ölaustritt

## Patentansprüche

1. Saugrohr (10) für eine Brennkraftmaschine, welches einen Sammelraum (12) mit einem Einlaß (11) für die Verbrennungsluft und von diesem ausgehend mindestens zwei Saugkanäle (13) mit zylinderseitigen Austritten (24) aufweist, wobei ein Zwischenraum (15), der durch benachbarte Saugkanäle gebildet wird, für ein weiteres Funktionselement der Brennkraftmaschine vorgesehen ist, **dadurch gekennzeichnet, dass** das Funktionselement einen Flansch zur Verbindung mit der Brennkraftmaschine aufweist.

2. Saugrohr nach Anspruch 1, **dadurch gekennzeichnet, dass** das Funktionselement mit dem Saugrohr (10) fest verbunden ist.

3. Saugrohr nach Anspruch 2, **dadurch gekennzeichnet, dass** das Funktionselement zumindest mit Teilen des Saugrohrs (10) einteilig hergestellt ist.

4. Saugrohr nach einem der vorherigen Ansprüche, **dadurch gekennzeichnet, dass** das Funktionselement ein Filtergehäuse ist.

5. Saugrohr nach Anspruch 4, **dadurch gekennzeichnet, dass** das Filtergehäuse einen Filterflansch (23) aufweist, welcher mit der Brennkraftmaschine derart verbindbar ist, dass mindestens ein Anschluß (28, 33, 36) zum Ölkreislauf der Brennkraftmaschine gebildet ist.

6. Saugrohr nach Anspruch 5, **dadurch gekennzeichnet, dass** der Filterflansch (23) einen Öleintritt (34) einen Ölaustritt (36) und einen Ölrücklauf (28) aufweist.

7. Saugrohr nach einem der Ansprüche 4 bis 6, **dadurch gekennzeichnet, dass** der Filterflansch eine Aufnahme für einen Ölkühler (33) und Kanalstrukturen (35) für dessen Einbindung in den Schmierölkreislauf der Brennkraftmaschine aufweist.

8. Saugrohr nach einem der vorherigen Ansprüche, **dadurch gekennzeichnet, dass** das Saugrohr an den zylinderseitigen Auslässen mit mechanischen Entkopplungselementen (14) versehen ist.

## Claims

1. Intake duct (10) for an internal combustion engine, which intake duct (10) has a manifold (12) with an inlet (11) for the air of combustion and at least two intake pipes (13) leading from said manifold with outlets (24) on the cylinder side, wherein an intermediate space (15), which is formed between adjacent intake pipes, is provided for an additional working element of the internal combustion engine, **characterised in that** the working element has a flange for connection to the internal combustion engine.

2. Intake duct according to claim 1, **characterised in that** the working element is securedly connected to the intake duct (10).

3. Intake duct according to claim 2, **characterised in that** the working element is produced in one piece at least with parts of the intake duct (10).

4. Intake duct according to one of the preceding claims, **characterised in that** the working element is a filter housing.

5. lntake duct according to claim 4, **characterised in that** the filter housing has a filter flange (23), which is connectable to the internal combustion engine in such a manner that at least one connection (28, 33, 36) is formed to the oil circuit of the internal combustion engine.

6. Intake duct according to claim 5, **characterised in that** the filter flange (23) has an oil inlet (34), an oil outlet (36) and an oil return line (28).

7. Intake duct according to one of claims 4 to 6, **characterised in that** the filter flange has a receiving means for an oil cooler (33) and pipe structures (35) for incorporation of said oil cooler into the lubricating oil circuit of the internal combustion engine.

8. Intake duct according to one of the preceding claims, **characterised in that** the intake duct is provided with mechanical decoupling elements (14) at the outlets on the cylinder side.

## Revendications

1. Tubulure d'admission (10) pour un moteur à combustion qui présente :
- un collecteur (12) avec une admission (11) pour l'air de combustion et, partant de celle-ci, au moins deux conduites d'aspiration (13) avec des sorties côté cylindre (24), et
- une chambre intermédiaire (15) formée par les conduites d'aspiration voisines et prévue pour un autre élément fonctionnel du moteur à combustion,
**caractérisée en ce que**
l'élément fonctionnel présente une collerette pour sa liaison avec le moteur à combustion.

2. Tubulure d'admission selon la revendication 1,
**caractérisée en ce que**
l'élément fonctionnel est relié fixement avec la tubulure d'admission (10).

3. Tubulure d'admission selon la revendication 2,
**caractérisée en ce que**
l'élément fonctionnel est fabriqué d'une seule pièce avec au moins des parties de la tubulure d'admission (10).

4. Tubulure d'admission selon une des revendications précédentes, **caractérisée en ce que**
l'élément fonctionnel est un boîtier de filtre.

5. Tubulure d'admission selon la revendication 4,
**caractérisée en ce que**
le boîtier de filtre présente une collerette de filtre (23) qui peut être reliée avec le moteur à combustion pour former moins une connexion (28, 33, 36) avec le circuit d'huile du moteur à combustion.

6. Tubulure d'admission selon la revendication 5,
**caractérisée en ce que**
la collerette de filtre (23) présente une arrivée d'huile (34), une sortie d'huile (36) et un circuit de retour d'huile (28).

7. Tubulure d'admission selon une des revendications 4 à 6,
**caractérisée en ce que**
la collerette de filtre présente un logement pour un refroidisseur d'huile (33) et des structures de canaux (35) pour son intégration dans le circuit d'huile de lubrification du moteur à combustion.

8. Tubulure d'admission une des revendications précédentes,
**caractérisée en ce que**
la tubulure d'admission est dotée d'éléments de désaccouplement mécaniques (14) au niveau des sorties côté cylindre.
